(19) **Europäisches Patentamt**
**European Patent Office**
**Office européen des brevets**

(11) **EP 4 614 615 A1**

(12) **EUROPEAN PATENT APPLICATION**
published in accordance with Art. 153(4) EPC

(43) Date of publication:
**10.09.2025 Bulletin 2025/37**

(21) Application number: **23885907.8**

(22) Date of filing: **27.04.2023**

(51) International Patent Classification (IPC):
**H01M 4/525** (2010.01)   **H01M 4/505** (2010.01)
**H01M 4/36** (2006.01)   **H01M 4/131** (2010.01)
**H01M 10/052** (2010.01)   **H01M 4/02** (2006.01)

(52) Cooperative Patent Classification (CPC):
**H01M 4/02; H01M 4/131; H01M 4/36; H01M 4/505;**
**H01M 4/525; H01M 10/052;** Y02E 60/10

(86) International application number:
**PCT/KR2023/005794**

(87) International publication number:
**WO 2024/096209 (10.05.2024 Gazette 2024/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **31.10.2022 KR 20220143073**

(71) Applicant: **ECOPRO BM CO., LTD.**
**Cheongju-si, Chungcheongbuk-do 28117 (KR)**

(72) Inventors:
• **HAN, Kyu Suk**
**Cheongju-si Chungcheongbuk-do 28116 (KR)**
• **CHOI, Jin Hyeok**
**Cheongju-si Chungcheongbuk-do 28116 (KR)**
• **SHIN, Jae Hoon**
**Cheongju-si Chungcheongbuk-do 28116 (KR)**
• **LEE, Seul Gi**
**Cheongju-si Chungcheongbuk-do 28116 (KR)**

(74) Representative: **Vossius & Partner**
**Patentanwälte Rechtsanwälte mbB**
**Siebertstrasse 3**
**81675 München (DE)**

(54) **LITHIUM COMPOSITE OXIDE, AND CATHODE ACTIVE MATERIAL FOR SECONDARY BATTERY, COMPRISING SAME**

(57)    A cathode active material of the present invention comprises a lithium nickel-based composite oxide comprising secondary particles formed by the aggregation of primary particles, wherein some cations and some anions in the lithium nickel-based composite oxide are replaced by a cation M' and a fluoride anion (F$^-$), respectively, which are contained in a fluorine-based compound, and the average Ni occupancy in the Li 3a site, obtained through Rietveld refinement using X-ray diffraction of the secondary particles, is 1.1-1.5%.

【FIG. 1】

Comparative Example          Example

**Description**

[Technical Field]

The present disclosure relates to a lithium nickel-based composite oxide and a cathode active material for a secondary battery including the same, and relates to a cathode active material in which cation and anion sites in a crystal structure in a polycrystal-type lithium nickel-based composite oxide are simultaneously replaced by a fluorine-based compound.

[Background Art]

With the advancement of portable mobile electronic devices such as smartphones, MP3 players and tablet PCs, the demand for secondary batteries capable of storing electrical energy is explosively increasing. In particular, with the advent of electric vehicles, medium- to large-sized energy storage systems and portable devices requiring high energy density, the demand for lithium secondary batteries is increasing.

As a lithium composite oxide included in a cathode active material, a material that has received the most attention recently is lithium nickel manganese cobalt oxide ($Li(Ni_xCo_yMn_z)O_2$, herein, x, y, z are atomic fractions of each independent oxide composition element, and $0<x\leq1$, $0<y\leq1$, $0<z\leq1$ and $0<x+y+z\leq1$). This cathode active material has an advantage of producing higher capacity compared to $LiCoO_2$ that has been actively studied and used as a cathode active material, and has an advantage of low price since the Co content is relatively small.

However, such a lithium composite oxide accompanies a volume change due to intercalation and deintercalation of lithium ions during charge and discharge. There is a problem in that primary particles of the lithium composite oxide rapidly change in volume during charge and discharge, cracks occur within secondary particles due to repeated charge and discharge, or collapse of a crystal structure or phase transition in a crystal structure occurs.

In order to compensate for such disadvantages, demand for a nickel (Ni) rich system-hi nickel system having a Ni content of 60% or greater as a cathode active material of a secondary battery began to increase. However, whereas such an active material with a nickel rich system has an excellent advantage of exhibiting high capacity, there are problems of increasing structural instability due to Li/Ni cation mixing caused by an increase in the Ni content, and rapidly deteriorating lifetime properties at room temperature and high temperature due to physical disconnection of inner particles caused by microcracks, deepening of electrolyte depletion and the like.

[Disclosure]

[Technical Problem]

The present disclosure is directed to providing a cathode active material in which a cation and an anion in a lithium nickel-based composite oxide are simultaneously replaced by a cation M' and a fluoride anion (F⁻), respectively, included in a fluorine-based compound, thereby having controlled Ni occupancy in a Li 3a site.

In addition, the present disclosure is directed to providing a cathode active material exhibiting both an effect of cation mixing suppression and an effect of structure strengthening by fluorine that replaces oxygen.

In addition, the present disclosure is directed to providing a cathode active material having significantly reduced lattice defects and residual lithium occurring during a high-temperature reaction.

In addition, the present disclosure is directed to providing a cathode active material improving a battery lifetime, and significantly suppressing gas generation during high-temperature storage.

In addition, the present disclosure is directed to providing a cathode active material significantly improving battery properties such as capacity/efficiency and c-rate of a battery

[Technical Solution]

A cathode active material of one embodiment of the present disclosure includes a lithium nickel-based composite oxide including secondary particles formed by aggregation of primary particles, wherein some cations and some anions in the lithium nickel-based composite oxide are replaced by a cation M' and a fluoride anion (F⁻), respectively, included in a fluorine-based compound, and average Ni occupancy in a Li 3a site obtained from a Rietveld refinement using X-ray diffraction of the secondary particles is from 1.1% to 1.5%.

In one embodiment, an average c-axis length obtained from the Rietveld refinement using X-ray diffraction of the secondary particles may be from 14.184 Å to 14.186 Å.

In one embodiment, in an XRD analysis for the lithium nickel-based composite oxide, FWHM$_{corrected\ (104)}$ corrected by the following Relation Formula 1 may be from 0.16° to 0.19° (2θ).

[Relation Formula 1]

$$FWHM_{corrected\ (104)} = FWHM_{measured\ (104)} - FWHM_{Si\ powder\ (220)}$$

In Relation Formula 1, $FWHM_{measured\ (104)}$ means a full width at half maximum of (104) peak observed at 44.5 $\pm 1.0°$ (2θ) in the XRD analysis of the lithium nickel-based composite oxide, and $FWHM_{Si\ (220)}$ means a full width at half maximum of (220) peak observed around 47.3±1.0° (2θ) in the XRD measurement value of Si powder.

In one embodiment, an average aspect ratio of the primary particles of a surface portion of the secondary particle may be larger than an average aspect ratio of the primary particles of an inside portion of the secondary particle.

In one embodiment, the secondary particle includes a surface portion and an inside portion, and an average primary particle size of the surface portion of the secondary particle may be larger than an average primary particle size of the inside portion of the secondary particle.

In one embodiment, the primary particles having a size of 200 nm or greater and less than 500 nm may account for 50% by volume to 100% by volume of the primary particles forming the secondary particle in the inside portion of the secondary particle.

In one embodiment, the primary particles having a size of 500 nm to 10.0 μm may account for 50% by volume to 100% by volume of the primary particles forming the secondary particle in the surface portion of the secondary particle.

In one embodiment, 50% or more of the primary particles of the surface portion of the secondary particle may be formed such that a major axis direction of the primary particles has an angle of less than ±30° from a line connecting the surface and the center of the secondary particle.

In one embodiment, 50% or more of the primary particles of the surface portion of the secondary particle may be formed such that a lithium ion diffusion path formed in the primary particles has an angle of less than ±30° from a line connecting the surface and the center of the secondary particle.

In one embodiment, the secondary particle may exhibit the greatest peak intensity at 684.3 eV to 685.0 eV as a result of analyzing 1s binding energy of fluorine obtained through XPS (X-ray photoelectron spectrometer) measurement.

In one embodiment, the cathode active material may further include a coating oxide occupying at least a portion of at least any one or more of surfaces of the secondary particles, grain boundaries between the primary particles and surfaces of the primary particles.

A cathode of the present disclosure includes the cathode active material.

A secondary battery of the present disclosure includes the cathode.

[Advantageous Effects]

As an effect, the present disclosure provides a cathode active material exhibiting both an effect of cation mixing suppression and an effect of structure strengthening by fluorine that replaces oxygen.

As an effect, the present disclosure provides a cathode active material having significantly reduced lattice defects and residual lithium occurring during a high-temperature reaction particularly in a high-nickel cathode active material.

As an effect, the present disclosure provides a cathode active material improving a battery lifetime, and significantly suppressing gas generation during high-temperature storage.

As an effect, the present disclosure provides a cathode active material significantly improving battery properties such as capacity/efficiency and c-rate of a battery.

[Description of Drawings]

FIG. 1 shows cross-sectional SEM images of cathode active materials according to Comparative Example and Example of the present disclosure.

FIG. 2 is a graph showing average Ni occupancy in a Li 3a site for cathode active materials according to the Comparative Example and the Example of the present disclosure.

FIG. 3 is a graph showing a c-axis length for cathode active materials according to the Comparative Example and the Example of the present disclosure.

FIG. 4 shows results of FWHM (104) analysis on cathode active materials according to the Comparative Example and the Example of the present disclosure.

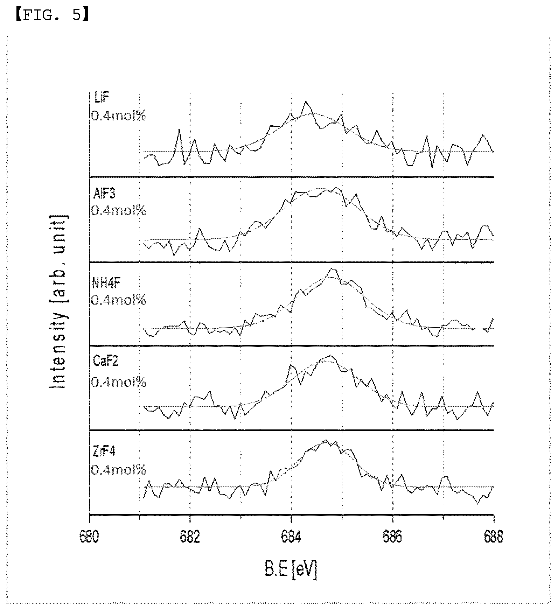

FIG. 5 shows results of XPS analysis on cathode active materials according to the Comparative Example and the Example of the present disclosure.

FIG. 6 shows results of analyzing a reaction initiation temperature when manufacturing cathode active materials according to the Comparative Example and the Example of the present disclosure.

FIG. 7 shows results of analyzing 90°C storage gas generation of batteries according to Comparative Example and Example of the present disclosure.

FIG. 8 shows results of analyzing a c-rate of batteries according to the Comparative Example and the Example of the present disclosure.

FIG. 9 shows results of analyzing a LiOH content for cathode active materials according to the Comparative Example and the Example of the present disclosure.

FIG. 10 shows results of analyzing a $Li_2CO_3$ content for cathode active materials according to the Comparative Example and the Example of the present disclosure.

[Mode for Disclosure]

Expressions such as "including" used in the present specification need to be understood as open-ended terms that imply possibilities of including other constitutions.

"Preferred" and "preferably" used in the present specification refer to embodiments of the present disclosure capable of providing certain advantages under certain circumstances. However, they are not intended to exclude other embodiments from the category of the present disclosure.

In addition, singular forms used in the specification and the appended claims may be intended to include plural forms as well unless particularly indicated otherwise in the context.

Meanwhile, technical features described below relate to one embodiment to achieve the intended effects of the present disclosure described above.

In other words, by including technical features according to one embodiment described below, a cathode active material according to one embodiment of the present disclosure is capable of significantly improving battery properties.

The cathode active material according to one embodiment of the present disclosure includes secondary particles formed by aggregation of primary particles.

In one embodiment, the primary particle may include one or more crystallites.

The secondary particle may have a form of multi-particle or poly-crystal including two or more of the primary particles. More preferably, the secondary particle may have a form of multi-particle or poly-crystal in which 20 or more of the primary particles aggregate.

In a more preferred embodiment, the secondary particle may have grain boundary density of 0.85 or greater, or 0.90 or greater.

In the present disclosure, the 'grain boundary density' may be calculated by the following Equation 1 for the primary particles placed on a straight line that crosses the center of the secondary particle in a minor axis direction in an SEM image obtained by photographing a cross section of a lithium composite oxide using a scanning electron microscope (SEM) after processing the cross section of the secondary particle.

Grain boundary density=number of grain boundaries between primary particles placed on the straight line/number of primary particles placed on the straight line     [Equation 1]

Explaining with an example, a non-aggregated single particle formed with a single primary particle may have grain boundary density calculated by Equation 1 of 0. In addition, when two primary particles aggregate, the grain boundary density calculated by Equation 1 may be 0.5.

Herein, the grain boundary density means, when 10 lines are arbitrarily drawn, an average value for the corresponding lines.

In one embodiment, the secondary particles may have an average particle size of 1 $\mu$m to 30 $\mu$m, and more preferably 8 $\mu$m to 20 $\mu$m.

Meanwhile, in the present disclosure, the "average particle size' represents an average diameter (D50) when the particle is spherical, and represents an average major axis length when the particle is non-spherical. In the present disclosure, an average value of the secondary particle size is measured using a particle size analyzer (cilas) and SEM. In addition, an average value of the primary particle size is measured by measuring a major axis length of the primary particle when the particle has a rod shape in the SEM image, and an average diameter value is calculated when the particle has a spherical shape. In addition, the crystallite size is measured through a Scherrer equation using full width at half maximum and θ values obtained by an XRD analysis.

In the present disclosure, the cathode active material may be a unimodal type. In addition, in another embodiment, the cathode active material may be a bimodal-type cathode active material further including lithium composite oxide secondary particles having an average particle size of 7 $\mu$m or less, which is different from the average particle size of the secondary particles.

The cathode active material according to one embodiment of the present disclosure includes a lithium nickel-based composite oxide including lithium, nickel and oxygen.

In one embodiment, the lithium nickel-based composite oxide may further include cobalt.

In one embodiment, the lithium nickel-based composite oxide may include lithium, nickel and aluminum.

In one embodiment, the lithium nickel-based composite oxide may include lithium, nickel and manganese.

In one embodiment, the lithium nickel-based composite oxide may be a high-nickel-based lithium composite oxide in which the nickel is included in an amount of 0.5 mol% or greater, 0.6 mol% or greater, 0.7 mol% or greater, 0.8 mol% or greater or 0.9 mol% or greater with respect to the total molar content of the transition metals.

In one embodiment, some cations and some anions in the lithium nickel-based composite oxide according to one embodiment of the present disclosure are simultaneously replaced by a cation M' and a fluoride anion, respectively, included in a fluorine-based compound. The cation M' and the fluoride anion included in a fluorine-based compound may be simultaneously present in a lattice structure of the primary particles included in the lithium nickel-based composite oxide particles, and this may be expressed as the fluorine-based compound being doped, or may be expressed as the fluorine-based compound functioning as a dopant.

The present disclosure is capable of maximizing battery properties such as lifetime and high-temperature storage by simultaneously substituting the cation and anion sites of the lithium nickel-based composite oxide with the fluorine-based compound. More specifically, fluorine has higher electronegativity than oxygen and thus further strengthens binding force with transition metals such as Ni, thereby further maximizing battery properties through increasing structural stability, and the cation of the fluorine-based compound is effective in suppressing cation mixing. The present disclosure is capable of maximizing battery properties such as lifetime and high-temperature storage by obtaining both of these effects.

In one embodiment, the cation M' of the fluorine-based compound may be any one or more selected from among cations of alkali metals, alkaline earth metals, transition metals and rare earth metals.

More preferably, the fluorine-based compound may be LiF, $CaF_2$, $MgF_2$, $AlF_3$ or $ZrF_4$.

Most preferably, the fluorine-based compound may be LiF or $CaF_2$. LiF may be very effective in suppressing cation mixing by excess Li and structure strengthening by fluorine that replaces oxygen, and may suppress gas generation during high-temperature storage. $CaF_2$ is effective in strengthening thermal stability since Ca has a large ionic radius and mostly enters the lithium site.

The doping content of the fluorine-based compound has a very important effect on such effects as well, and the inventors of the present disclosure are able to dramatically improve lifetime and high-temperature storage properties by controlling all of specific processes, doping materials and doping contents of the present disclosure.

The lithium nickel-based composite oxide according to one embodiment of the present disclosure may be doped with the fluorine-based compound and represented by the following Chemical Formula 1.

[Chemical Formula 1] $\quad\quad Li_aNi_xCo_yM_zM'_{1-x-y-z}O_{2-q}F_q$

In Chemical Formula 1, M is selected from the group consisting of Al, Mn, B, Ba, Ce, Cr, F, Mg, V, Ti, Fe, Zr, Zn, Si, Y, Nb, Ga, Sn, Mo, W, P, Sr and combinations thereof, M' is any one or more selected from among cations of alkali metals, alkaline earth metals, transition metals and rare earth metals, and $0.9 \le a \le 1.3$, $0.5 \le x < 1.0$, $0.0 \le y \le 0.2$, $0.0 \le z \le 0.2$ and $0.0 < q \le 0.1$.

In one embodiment, the nickel-based lithium composite oxide may be represented by the following Chemical Formula 2.

[Chemical Formula 2] $\quad\quad Li_{a'}Ni_{x'}Co_{y'}M1_{z'}M2_{t'}M' =_{1-x'-y'-z'-t'}O_{2-q'}F_{q'}$

In Chemical Formula 2, M1 is Al or Mn, M2 is selected from the group consisting of B, Ba, Ce, Cr, F, Mg, V, Ti, Fe, Zr, Zn, Si, Y, Nb, Ga, Sn, Mo, W, P, Sr and combinations thereof, M' is any one or more selected from among cations of alkali metals, alkaline earth metals, transition metals and rare earth metals, and $0.9 \le a' \le 1.3$, $0.5 \le x' \le 1.0$, $0.0 \le y' \le 0.2$, $0.0 \le z' \le 0.2$, $0.0 \le t' \le 0.2$ and $0.0 < q' \le 0.1$.

In one embodiment, a and a' may be 0.9 to 1.2 or 0.9 to 1.1.

More preferably, M and/or M' may be any one or more selected from among Li, Ca, Mg, Al and Zr.

More preferably, q and/or q' may be 0.001 or greater, 0.002 or greater, 0.003 or greater, 0.004 or greater, 0.005 or greater, 0.05 or less, 0.04 or less, 0.03 or less or 0.02 or less, and may be 0.003 to 0.03, 0.005 to 0.02, or 0.01 to 0.02.

More preferably, the fluorine-based compound may be included in an amount of 0.1 mol% or greater, 0.2 mol% or greater, 0.3 mol% or greater, 0.4 mol% or greater, 0.5 mol% or greater, 5 mol% or less, 4 mol% or less, 3 mol% or less or 2 mol% or less with respect to the total mol% of metals excluding lithium, and may be included in an amount of 0.3 mol% or greater and 3 mol% or less, 0.5 mol% or greater and 2 mol% or less, or 1 mol% or greater and 2 mol% or less.

By controlling the doping content to the above-mentioned content together with specific process and specific doping material in the present disclosure, it is identified that the present disclosure has significantly improved effects in suppressing cation mixing, structure strengthening by fluorine that replaces oxygen, and suppressing gas generation during high-temperature storage.

The cathode active material according to one embodiment of the present disclosure may have average Ni occupancy of 1.1% to 1.5%, 1.2% to 1.4%, or 1.2% to 1.3% in the Li 3a site obtained from the Rietveld refinement using X-ray diffraction of the secondary particles. By controlling the doping content together with specific process and specific doping material, the present disclosure may control Ni occupancy in the Li 3a site. Accordingly, the degree of cation mixing may be controlled.

The cathode active material according to one embodiment of the present disclosure may have an average c-axis length of 14.184 Å to 14.186 Å obtained from the Rietveld refinement using X-ray diffraction of the secondary particles. By controlling the doping content together with specific process and specific doping material, the present disclosure may control the c-axis length. Accordingly, the degree of cation mixing may be controlled.

In one embodiment, in the XRD analysis for the lithium nickel-based composite oxide, $FWHM_{corrected\ (104)}$ corrected by the following Relation Formula 1 may be from 0.16° to 0.19° (2θ) or 0.17° to 0.19° (2θ).

[Relation Formula 1]

$$FWHM_{corrected\ (104)} = FWHM_{measured\ (104)} - FWHM_{Si\ powder\ (220)}$$

Herein, $FWHM_{(104)}$ means a full width at half maximum (FWHM; deg., 2θ) of (104) peak in the XRD peak defined by a hexagonal lattice having a R-3m space group.

In Relation Formula 1, $FWHM_{measured\ (104)}$ means a full width at half maximum of (104) peak observed at 44.5 ±1.0° (2θ) in the XRD analysis of the lithium nickel-based composite oxide, and the $FWHM_{Si\ (220)}$ means a full width at half maximum of (220) peak observed around 47.3±1.0° (2θ) in the XRD measurement value of Si powder.

Since the measured value for the full width at half maximum (FWHM) of the lithium nickel-based composite oxide according to the present disclosure has deviations and errors during the XRD analysis due to various variables such as condition of analysis equipment, X-ray sources and measurement conditions, the value is corrected with a full width at half maximum (FWHM) of Si powder as a standard sample as in Relation Formula 1.

Measurements of $FWHM_{(104)}$ and $FWHM_{(220)}$ for Si powder are calculated by fitting of a Gaussian function, and the Gaussian function fitting for the FWHM measurements may be performed using various academic/public/commercial software known to those skilled in the art.

Meanwhile, Si powder (product number 215619) of Sigma-Aldrich is used as the Si powder.

In one embodiment, the secondary particle includes a surface portion and an inside portion. By controlling the doping content to a specific content together with specific process and specific doping material in the present disclosure, a lithium nickel-based composite oxide in which the surface portion and the inside portion of the secondary particle are distinguished by technical features to be described below may be obtained. When a specific doping compound is doped at a specific content depending on specific heat treatment temperature and reaction time, the fluorine-based compound may be mainly doped in the surface portion of the secondary particle.

Herein, the surface portion of the secondary particle means a section of 2 μm to 3 μm from the outermost layer of the secondary particle, and the inside portion of the secondary particle means a section excluding the surface portion of the secondary particle.

In one embodiment, an average primary particle size of the surface portion of the secondary particle may be larger than an average primary particle size of the inside portion of the secondary particle.

In one embodiment, the primary particles having a size of 200 nm or greater and less than 500 nm may account for 50% by volume to 100% by volume of the primary particles forming the secondary particle in the inside portion of the secondary particle.

In one embodiment, the primary particles having a size of 200 nm or greater and less than 300 nm may account for 50% by volume to 100% by volume of the primary particles forming the secondary particle in the inside portion of the secondary particle.

In one embodiment, the primary particles may have an average size of 200 nm to 500 nm, 200 nm to 300 nm, or 200 nm to 250 nm in the inside portion of the secondary particle.

In addition, in one embodiment, the primary particles having a size of greater than 500 nm to 10.0 μm may account for 50% by volume to 100% by volume, 70% by volume to 100% by volume, or 100% by volume of the primary particles forming the secondary particle in the surface portion of the secondary particle.

In addition, in one embodiment, the primary particles having a size of 1 μm to 10 μm may account for 50% by volume to 100% by volume, 70% by volume to 100% by volume, or 100% by volume of the primary particles forming the secondary particle in the surface portion of the secondary particle.

In one embodiment, the primary particles of the surface portion of the secondary particle may have an average size of 500 nm or greater and 2 μm or less, 800 nm or greater and 1.5 μm or less, or 1.0 μm or greater and 1.2 μm or less.

In one embodiment, the average primary particle size of the surface portion of the secondary particle may be 1.2 times, 1.5 times, 2.0 times or 3.0 times or more larger than the average primary particle size of the inside portion of the secondary particle.

In one embodiment, an average aspect ratio of the primary particles of the surface portion of the secondary particle may be larger than an average aspect ratio of the primary particles of the inside portion of the secondary particle.

In the present specification, the aspect ratio means a length of the longest axis/length of the shortest axis.

In one embodiment, the primary particles of the surface portion of the secondary particle may have an average aspect ratio of 2.0 or greater, 2.4 or greater, 2.7 or greater, 3.0 or greater, or 20.0 or less.

In one embodiment, the primary particles of the inside portion of the secondary particle may have an average aspect ratio of 1.0 or greater, greater than 1.0, 1.2 or greater, greater than 1.2, less than 2.0, 1.5 or less, or less than 1.5.

In one embodiment, the average aspect ratio of the primary particles of the surface portion of the secondary particle may be 2.0 times or greater, 2.4 times or greater, or 10.0 times or less than the average aspect ratio of the primary particles of the inside portion of the secondary particle.

In the lithium nickel-based composite oxide according to one embodiment of the present disclosure, the doped fluoride anion may have a concentration gradient in the surface portion of the secondary particle.

In addition, in one embodiment, 50% or more of the primary particles of the surface portion of the secondary particle may be formed such that a major axis direction of the primary particles has an angle of less than ±30° from a line connecting the surface and the center of the secondary particle.

In addition, in one embodiment, 50% or more of the primary particles of the surface portion of the secondary particle may be formed such that a lithium ion diffusion path formed in the primary particles has an angle of less than ±30° from a line connecting the surface and the center of the secondary particle.

In the present disclosure, the lithium ion diffusion path formed in the primary particles of the lithium nickel-based composite oxide is formed to be parallel to the major axis direction of the primary particles, and therefore, diffusion capacity of the lithium ions mediated by the lithium nickel-based composite oxide may be improved.

In one embodiment, the secondary particle may exhibit the greatest peak intensity at 684.3 eV to 685.0 eV as a result of analyzing 1s binding energy of fluorine obtained through XPS (X-ray photoelectron spectrometer) measurement. From the XPS analysis result, it may be identified that F is mainly present in the surface portion of the secondary particle. Particularly, as a result of the binding energy analysis, it may be identified that the O site is appropriately replaced by F.

Meanwhile, the cause of battery property deterioration during lifetime or high-temperature storage is directly related to a phenomenon of oxygen deintercalation in a nickel-based cathode active material, particularly, a high-nickel cathode active material, and the XPS analysis result indicates that the present disclosure may be efficient in suppressing oxygen deintercalation during lifetime or high-temperature storage.

Meanwhile, lithium, a main raw material of a cathode active material, is highly volatile at a high temperature. Accordingly, when reacting a cathode active material for a long time at a high temperature for preparation, various types of lattice defects are caused as the stoichiometric ratio between lithium/transition metal changes, and as a result, properties such as capacity/lifetime may decline. Particularly, in a high nickel system with a large amount of Ni for high capacity, defects occur much by such high-temperature calcination, and this is related to the oxidation state of Ni being reduced from +3 to +2 as the amount of Li changes in the structure during calcination. Accordingly, in order to resolve this, the calcination maintaining temperature needs to be lowered as much as possible, and the reaction initiation temperature of lithium needs to be lowered as much as possible. When the reaction initiation temperature of lithium is lowered, the content of residual lithium may also be reduced.

The present disclosure lowers the reaction initiation temperature of lithium by controlling a specific fluorine-based compound to have a content in a specific range, thereby lowering the content of residual lithium (Li) present in the forms of LiOH and $Li_2CO_3$ .

In one embodiment, the content of residual lithium (Li) present in the form of LiOH on the secondary particle surface may be 11,300 ppm or less, or 11,000 ppm or less.

In addition, in one embodiment, the content of residual lithium (Li) present in the form of $Li_2CO_3$ on the secondary particle surface may be 6000 ppm or less, 5000 ppm or less, or 3000 ppm or less.

In one embodiment, the cathode active material may further include a coating oxide occupying at least a portion of at least any one or more of surfaces of the secondary particles, grain boundaries between the primary particles and surfaces of the primary particles.

In one embodiment, the coating oxide may be represented by the following Chemical Formula 3.

[Chemical Formula 3]  $Li_pM3_qO_r$

In Chemical Formula 3, M3 is any one or more selected from among Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Gd and Nd, and $0 \leq p \leq 10$, $0 < q \leq 8$ and $2 \leq r \leq 13$.

For example, in Chemical Formula 3, M3 means a coating element, and the coating oxide may be an oxide in which lithium and the element represented by M3 are composited, or an oxide of M3.

For example, the coating oxide may be $Li_pCo_qO_r$, $Li_pW_qO_r$, $Li_pZr_qO_r$, $Li_pTi_qO_r$, $Li_pNi_qO_r$, $Li_pAl_qO_r$, $Li_pMo_qO_r$, $Co_qO_r$, $Al_qO_r$, $W_qO_r$, $Zr_qO_r$, $Ti_qO_r$, $B_qO_r$, $Li_p(W/Ti)_qO_r$, $Li_p(W/Zr)_qO_r$, $Li_p(W/Ti/Zr)_qO_r$ or $Li_p(W/Ti/B)_qO_r$, but is not limited thereto.

The coating oxide may include a concentration gradient portion in which a molar concentration of the element included in the coating oxide changes. For example, when the coating oxide includes lithium, a molar concentration of lithium may change. In addition, for example, molar concentrations of any one or more of M3 included in the coating oxide may change.

In one embodiment, when the coating oxide occupies at least a portion of the surface area of the primary particle forming the outermost layer of the secondary particle, the concentration gradient portion may decrease, increase, or increase or decrease in a direction from the surface of the primary particle forming the outermost layer of the secondary particle to the center of the secondary particle.

In addition, the concentration gradient portion may decrease, increase, or increase or decrease in a direction from the surface of the primary particle forming the outermost layer of the secondary particle to the center of the primary particle.

In one embodiment, when the coating oxide occupies at least a portion of the surface area of the primary particle that does not form the outermost layer of the secondary particle, the concentration gradient portion may decrease, increase, or increase or decrease in a direction from the surface of the primary particle to the center of the primary particle.

Meanwhile, technical features relating to the primary particle or secondary particle of the lithium nickel-based composite oxide described above may relate to average features of a plurality of the particles.

In addition, the meaning of '≤', 'or greater' or 'or less' described in the present disclosure may be replaced with a meaning of '<', 'greater than' or 'less than'.

A cathode according to one embodiment of the present disclosure includes the cathode active material.

Except for using the cathode active material described above, the cathode may have a known structure and prepared using a known preparation method. A binder, a conductor and a solvent are not particularly limited as long as they may be used on a cathode current collector of a secondary battery.

A secondary battery according to one embodiment of the present disclosure includes the cathode active material.

The secondary battery may specifically include a cathode, a negative electrode placed opposite to the cathode, and an electrolyte provided between the cathode and the negative electrode, but is not particularly limited thereto as long as it may be used as a secondary battery.

Hereinafter, examples of the present disclosure will be described more specifically.

**Preparation of Cathode Active Material**

**<Example 1>**

First, nickel sulfate, cobalt sulfate and manganese sulfate were prepared, and a coprecipitation reaction was performed to synthesize a $NiCoMn(OH)_2$ hydroxide precursor (Ni:Co:Mn=90:8:2 (at%)).

To the synthesized precursor, LiOH (Li/(Ni+Co+Mn) mol ratio=1.04) and a fluorine-based compound were added in various amounts, and then the mixture was calcined to prepare a lithium composite oxide. Herein, LiOH and the fluorine-based compound were mixed into the precursor, and by raising the temperature by 2°C per minute while maintaining the $O_2$ atmosphere in a furnace, the mixture was heat treated for 10 hours at 665°C, and then naturally cooled.

Herein, the fluorine-based compound added in the Example was LiF, $CaF_2$, $AlF_3$, $MgF_2$, $NH_4F$ and $ZrF_4$, and each of these was added in various amounts of 0.2 mol%, 0.5 mol%, 1 mol%, 2 mol%, 3 mol%, 4 mol% and 5 mol% with respect to the total molar content of the metals excluding lithium.

**<Example 2>**

To the cathode active material prepared in Example 1, $TiO_2$, $Al_2O_3$ and $ZrO_2$ were mixed in amounts of 0.6 mol%, 0.6 mol% and 0.1 mol%, respectively, and by raising the temperature by 4.4°C per minute while maintaining the $O_2$ atmosphere in a furnace, the mixture was heat treated for 8 hours at 675°C, and then naturally cooled to obtain a lithium composite oxide.

To the obtained lithium composite oxide, distilled water was introduced, and the result was washed for 1 hour. The washed lithium composite oxide was filtered, and then dried.

Then, the dried lithium composite oxide was mixed together with a raw material containing B ($H_3BO_3$) using a mixer. The raw material containing B ($H_3BO_3$) was mixed so that the amount was 0.235% by weight with respect to the total weight of the lithium composite oxide. The mixture was heat treated for 8 hours at 300°C in the same furnace by raising the temperature by 4.4°C per minute while maintaining the $O_2$ atmosphere, and then naturally cooled.

**<Comparative Example 1>**

A cathode active material was prepared in the same manner as in Example 1 except that the fluorine-based compound was not added.

**<Comparative Example 2>**

A cathode active material was prepared in the same manner as in Example 2, except that $TiO_2$, $Al_2O_3$ and $ZrO_2$ were mixed into the cathode active material prepared in Comparative Example 1 in which the fluorine-based compound was not added.

**Manufacture of Lithium Secondary Battery**

94 wt% of the cathode active material prepared in each of the Examples and Comparative Examples, 3 wt% of artificial graphite and 3 wt% of a PVDF binder were dispersed in 3.5 g of N-methyl-2 pyrrolidone (NMP) to prepare a cathode slurry. The cathode slurry was coated and dried on an aluminum (Al) thin film, a cathode current collector, having a thickness of 15 $\mu$m, and roll pressed to prepare a cathode. The cathode had a loading level of 7 mg/cm$^2$, and electrode density of 3.2 g/cm$^3$.

A coin battery was manufactured according to a commonly known manufacturing process employing lithium foil as a counter electrode for the cathode and a porous polyethylene film (Celgard 2300, thickness: 25 $\mu$m) as a separator, and using an electrolyte liquid in which $LiPF_6$ is present at a concentration of 1.5 M in a solvent obtained by mixing ethylene carbonate and ethylmethyl carbonate in a volume ratio of 3:7.

**<Experimental Example>**

**(1) Cross-Sectional SEM Image**

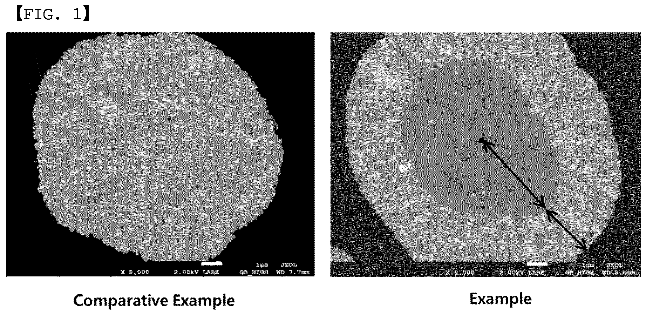

For each of the cathode active materials of Example 1 and Comparative Example 1, the cross section was obtained using a cross section polisher at a current of 380 $\mu$A for 1 hour and 30 minutes. A cross-sectional SEM image of the lithium composite oxide was obtained using JSM-7610FPlus (JEOL Ltd.) as FE-SEM at a voltage of 2 kV, and the image is shown in FIG. 1.

**(2) Ni Occupancy**

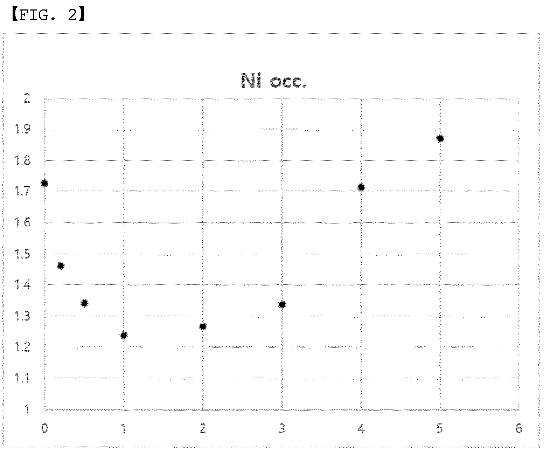

For each of the cathode active materials of Example 1 and Comparative Example 1, Ni occupancy inserted into a Li 3a site of the cathode active material was measured from the Rietveld refinement using X-ray diffraction, and the results are shown in FIG. 2. The XRD analysis was performed using a Bruker D8 Advance diffractometer with Cu-K$\alpha$ radiation (1.540598Å) at a step interval of 0.02° in a 2θ range of 10° to 80° (2θ) .

**(3) c-Axis Length**

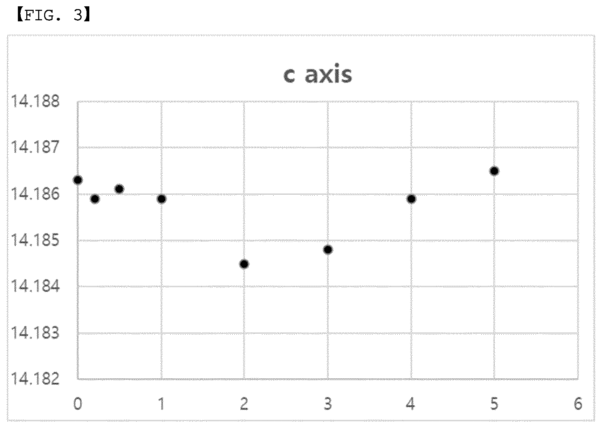

For each of the cathode active materials of Example 1 and Comparative Example 1, the length of c-axis obtained from the Rietveld refinement using X-ray diffraction was measured, and the results are shown in FIG. 3. The XRD analysis was performed using a Bruker D8 Advance diffractometer with Cu-K$\alpha$ radiation (1.540598Å) at a step interval of 0.02° in a 2θ range of 10° to 80° (20).

**(4) Measurement of Full Width at Half Maximum**

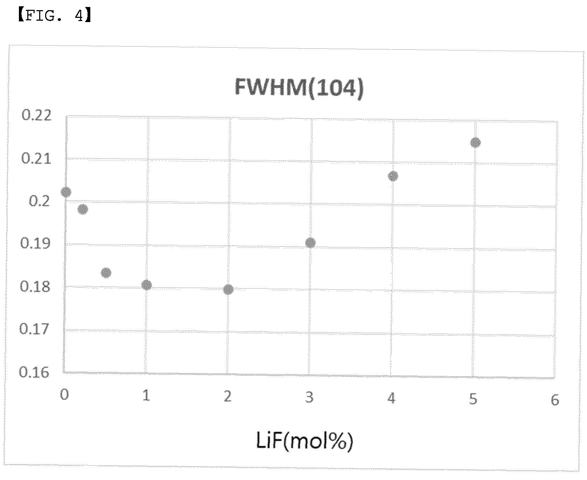

For each of the cathode active materials of Example 1 and Comparative Example 1, peaks belonging to the crystal plane of the lithium composite oxide included in the cathode active material were detected by performing an X-ray diffraction (XRD) analysis, and the results are shown in FIG. 4. The XRD analysis was performed using a Bruker D8 Advance diffractometer with Cu-K$\alpha$ radiation (1.540598Å) at a step interval of 0.02° in a 2θ range of 10° to 80° (2θ).

**(5) XPS Analysis**

For each of the cathode active materials of Example 1 and Comparative Example 1, an XPS analysis was performed. The XPS analysis was performed using Nexsa (Thermo Fisher) (minimum analysis area: 10 $\mu$m to 200 $\mu$m) with Al-K$\alpha$ radiation, and through this, 1s binding energy of fluorine included in the lithium composite oxide is shown in FIG.

5.

**(6) Analysis on Reaction Initiation Temperature**

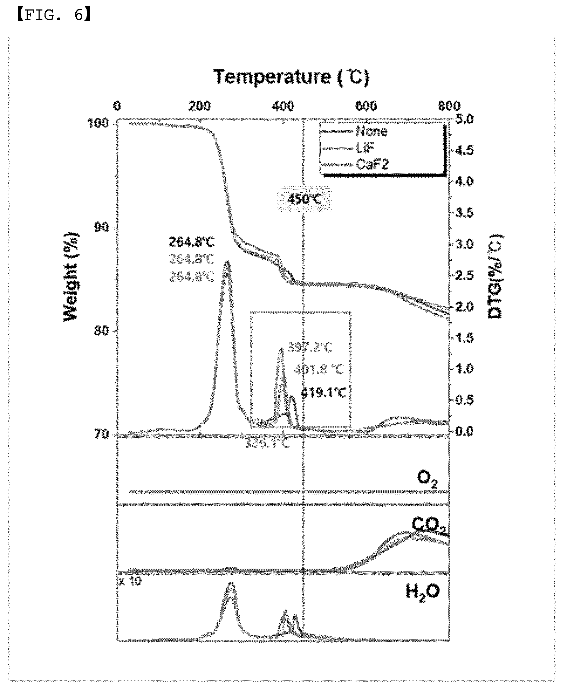

For each of the cathode active materials of Example 1 and Comparative Example 1, the reaction initiation temperature of lithium was analyzed, and the results are shown in FIG. 6.

**(7) Analysis on Amount of Gas Generation**

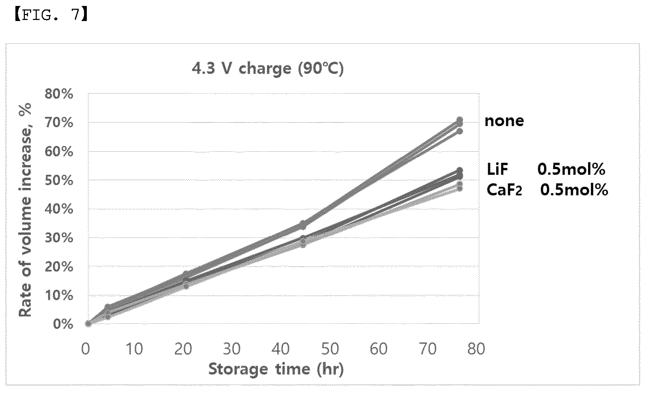

Each of the lithium secondary batteries of Example 2 and Comparative Example 2 was charged to 4.25 V with a constant current of 0.2 C, and then stored at 60°C for up to 80 hours. The rate of volume increase, which is an indicator of gas generation, was measured by measuring changes in the volume of the lithium secondary battery caused by gas generation in the lithium secondary battery, and the results are shown in FIG. 7.

**(8) Analysis on c-Rate Efficiency**

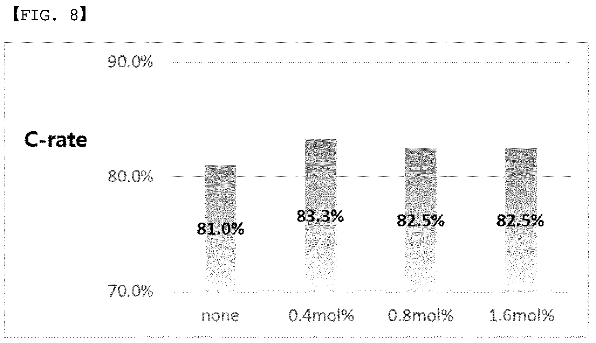

For each of the lithium secondary batteries of Example 2 and Comparative Example 2, c-rate efficiency of 5.0 C/0.1 C was measured by employing a voltage range of 3.0 V to 4.3 V and a discharge rate of 0.1 C to 5.0 C at 25°C using an electrochemical analysis device (Toyo, Toscat-3100), and the results are shown in FIG. 8.

**(9) Analysis on Residual Lithium**

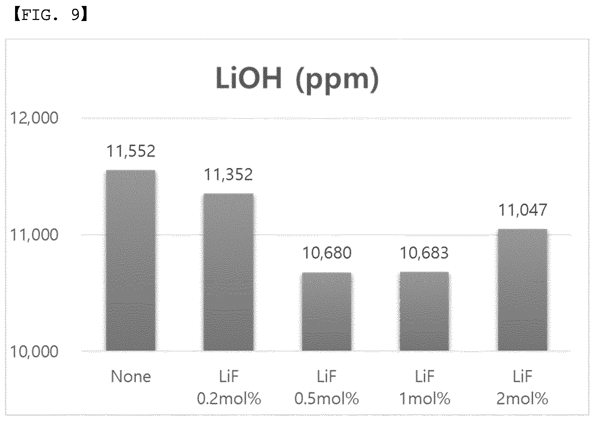

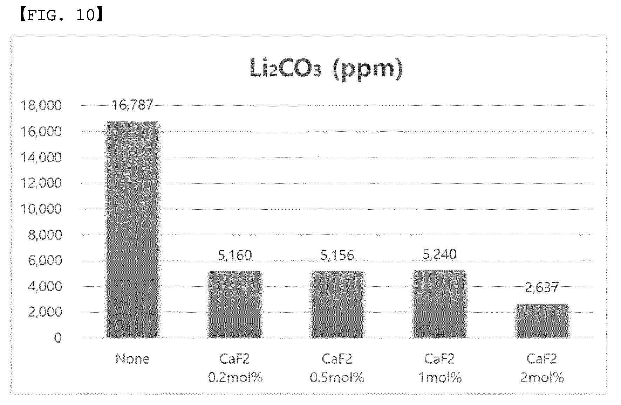

The residual lithium was measured by an amount of 0.1 M HCl used until the pH reached 4 by pH titration. First, 5 g of the cathode active material of each of Example 1 and Comparative Example 1 was introduced to 100 ml of DIW, and then the mixture was stirred for 15 minutes and filtered. After taking 50 ml of the filtered solution, 0.1 M HCl was added thereto, and the amount of HCl consumed depending on the pH change was measured to determine Q1 and Q2. Unreacted LiOH and $Li_2CO_3$ were calculated through the following equations, and the results are shown in FIGS. 9 and 10.

M1=23.95 (LiOH molecular weight)
M2=73.89 ($Li_2CO_3$ molecular weight)

$$SPL\ size=(sample\ weight\times solution\ weight)/water\ weight$$

$$LiOH\ (wt\%)=[(Q1-Q2)\times C\times M1\times 100]/(SPL\ size\times 1000)$$

$$Li_2CO_3\ (wt\%)=[2\times Q2\times C\times M2/2\times 100]/(SPL\ size\times 1000)$$

**Claims**

1. A cathode active material comprising a lithium nickel-based composite oxide including secondary particles formed by aggregation of primary particles,
   wherein some cations and some anions in the lithium nickel-based composite oxide are replaced by a cation M' and a fluoride anion (F⁻), respectively, included in a fluorine-based compound, and
   average Ni occupancy in a Li 3a site obtained from the Rietveld refinement using X-ray diffraction of the secondary particles is from 1.1% to 1.5%.

2. The cathode active material of claim 1, wherein an average c-axis length obtained from a Rietveld refinement using X-ray diffraction of the secondary particles is from 14.184 Å to 14.186 Å.

3. The cathode active material of claim 1, wherein, in an XRD analysis for the lithium nickel-based composite oxide, $FWHM_{corrected\ (104)}$ corrected by the following Relation Formula 1 is from 0.16° to 0.19° (2θ):

$$[Relation\ Formula\ 1]$$

$$FWHM_{corrected\ (104)}=FWHM_{measured\ (104)}-FWHM_{Si\ powder\ (220)}$$

in Relation Formula 1, FWHM $_{measured\ (104)}$ means a full width at half maximum of (104) peak observed at 44.5±1.0° (2θ) in the XRD analysis of the lithium nickel-based composite oxide, and FWHM$_{Si\ (220)}$ means a full width at half maximum of (220) peak observed around 47.3±1.0° (2θ) in the XRD measurement value of Si powder.

4.  The cathode active material of claim 1, wherein the secondary particle includes a surface portion and an inside portion, and an average primary particle size of the surface portion of the secondary particle is larger than an average primary particle size of the inside portion of the secondary particle.

5.  The cathode active material of claim 4, wherein the primary particles having a size of 200 nm or greater and less than 500 nm account for 50% by volume to 100% by volume of the primary particles forming the secondary particle in the inside portion of the secondary particle.

6.  The cathode active material of claim 4, wherein the primary particles having a size of 500 nm to 10.0 μm account for 50% by volume to 100% by volume of the primary particles forming the secondary particle in the surface portion of the secondary particle.

7.  The cathode active material of claim 4, wherein an average aspect ratio of the primary particles of the surface portion of the secondary particle is larger than an average aspect ratio of the primary particles of the inside portion of the secondary particle.

8.  The cathode active material of claim 4, wherein 50% or more of the primary particles of the surface portion of the secondary particle are formed such that a major axis direction of the primary particles has an angle of less than ±30° from a line connecting the surface and the center of the secondary particle.

9.  The cathode active material of claim 4, wherein 50% or more of the primary particles of the surface portion of the secondary particle are formed such that a lithium ion diffusion path formed in the primary particles has an angle of less than ±30° from a line connecting the surface and the center of the secondary particle.

10. The cathode active material of claim 4, wherein the secondary particle exhibits greatest peak intensity at 684.3 eV to 685.0 eV as a result of analyzing 1s binding energy of fluorine obtained through XPS (X-ray photoelectron spectrometer) measurement.

11. The cathode active material of claim 1, further comprising a coating oxide occupying at least a portion of at least any one or more of surfaces of the secondary particles, grain boundaries between the primary particles and surfaces of the primary particles.

12. A cathode comprising the cathode active material of claim 1.

13. A secondary battery comprising the cathode of claim 12.

【FIG. 1】

Comparative Example                Example

【FIG. 2】

【FIG. 3】

【FIG. 4】

EP 4 614 615 A1

【FIG. 5】

16

【FIG. 6】

【FIG. 7】

【FIG. 8】

【FIG. 9】

【FIG. 10】

## INTERNATIONAL SEARCH REPORT

International application No.

**PCT/KR2023/005794**

| A. | CLASSIFICATION OF SUBJECT MATTER |
|---|---|

**H01M 4/525**(2010.01)i; **H01M 4/505**(2010.01)i; **H01M 4/36**(2006.01)i; **H01M 4/131**(2010.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); H01M 10/05(2010.01); H01M 10/052(2010.01); H01M 4/04(2006.01); H01M 4/485(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 2차입자(secondary particle), 양이온(cation), 음이온(anion), 치환(substitution), 불소(fluorine), Ni 점유율(Ni occupancy)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WANG, H. et al. Effect of Cationic (Na+) and Anionic (F-) Co-Doping on the Structural and Electrochemical Properties of LiNi1/3Mn1/3Co1/3O2 Cathode Material for Lithium-Ion Batteries. International Journal of Molecular Sciences. 17 June 2022, vol. 23, article no. 6755, pp. 1-21. See abstract; pages 1, 4, 8 and 18; tables 1 and 5; and figure 7. | 1-13 |
| Y | KR 10-2019-0124078 A (ECOPRO BM CO., LTD.) 04 November 2019 (2019-11-04) See claims 1-2; and paragraph [0038]. | 1-13 |
| Y | KR 10-2013-0129449 A (SUMITOMO METAL MINING CO., LTD.) 28 November 2013 (2013-11-28) See claims 7-8 and 13; and paragraph [0319]. | 4-11 |
| Y | KR 10-2021-0067842 A (ECOPRO BM CO., LTD.) 08 June 2021 (2021-06-08) See claim 1; and paragraph [0095]. | 7-9 |
| A | KR 10-2008-0105637 A (LS MTRON LTD.) 04 December 2008 (2008-12-04) See entire document. | 1-13 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 August 2023** | **01 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/005794**

| Patent document cited in search report | | | Publication date (day/month/year) | Patent family member(s) | | | Publication date (day/month/year) |
|---|---|---|---|---|---|---|---|
| KR | 10-2019-0124078 | A | 04 November 2019 | CN | 110400915 | A | 01 November 2019 |
| | | | | CN | 110400915 | B | 08 November 2022 |
| | | | | KR | 10-2123274 | B1 | 17 June 2020 |
| | | | | US | 10991938 | B2 | 27 April 2021 |
| | | | | US | 2019-0334163 | A1 | 31 October 2019 |
| KR | 10-2013-0129449 | A | 28 November 2013 | CN | 103562136 | A | 05 February 2014 |
| | | | | CN | 103562136 | B | 21 September 2016 |
| | | | | JP | 2014-131779 | A1 | 24 July 2014 |
| | | | | JP | 4840545 | B1 | 21 December 2011 |
| | | | | KR | 10-1345509 | B1 | 27 December 2013 |
| | | | | US | 2013-0337331 | A1 | 19 December 2013 |
| | | | | US | 9559351 | B2 | 31 January 2017 |
| | | | | WO | 2012-131779 | A1 | 04 October 2012 |
| KR | 10-2021-0067842 | A | 08 June 2021 | KR | 10-2021-0067838 | A | 08 June 2021 |
| | | | | KR | 10-2023-0033698 | A | 08 March 2023 |
| | | | | KR | 10-2430966 | B1 | 11 August 2022 |
| | | | | KR | 10-2468595 | B1 | 18 November 2022 |
| KR | 10-2008-0105637 | A | 04 December 2008 | KR | 10-0874539 | B1 | 16 December 2008 |

Form PCT/ISA/210 (patent family annex) (July 2022)